# EUROPEAN PATENT SPECIFICATION

(11) **EP 0 491 455 B1**
(45) Date of publication and mention of the grant of the patent: **27.12.1995**
(21) Application number: 91306146.1
(22) Date of filing: 05.07.1991
(51) Int. Cl.: G06F 17/60

(54) **Offer matching system**
Angebotsanpassungssystem
Système pour assortir des offres

(30) Priority: 17.12.1990 GB 9027249; 27.02.1991 GB 9104121
(43) Date of publication of application: 24.06.1992
(73) Proprietor: REUTERS LIMITED, London, EC4P 4AJ (GB)
(72) Inventor: Ordish, Christopher J., Virginia Water, Surrey GU25 4AW (GB); Richards,John M., Blewbury, Didcot, Oxfordshire OX11 9QA (GB); MacKenzie, Clifford A., Dix Hills, New York 11746 (US)
(74) Representative: Waldren, Robin Michael

(56) References cited:
- EP-A- 0 073 698
- EP-A- 0 343 820
- EP-A- 0 399 850
- US-A- 3 573 747
- US-A- 4 789 928
- US-A- 4 903 201
- COMMUNICATIONS OF THE ASSOCIATION FOR COMPUTING MACHINERY vol. 29, no. 1, January 1986, NEW YORK US pages 19 - 29 , XP000002077 J-P. BANATRE ET AL 'The Design and Building of Enchère, a Distributed Electronic Marketing System'

## Description

### BACKGROUND TO THE INVENTION

In matching systems such as the system described in EP-A-0399850, clients are connected to a central computer system and offers to buy or sell from clients are matched by the central system. In this specification the term 'offer' is used in its contract law sense, where an offer is made by one party and can be accepted by another party. Sometimes the other party rejects the offer but makes his own offer on different terms which the first party may accept. A contract requires an offer to be accepted.

Since the clients are remote from each other and the transmission channels between clients and the central system are not completely error free, contracts made in this way are only considered completed when the normal offer has been made by one client, an acceptance has been made by another client, details have been sent to each client of the other party to the contract and confirmation has been received at the central system from each client that the details of the contract have been received.

There is a problem in this system when one communication channel fails during the transaction. It may occur that although confirmation is sent to one client and acknowledged, the other party does not receive details of the contract and/or his acknowledgement does not reach the central system. If the communication channel which fails is that of the purchaser and failure occurs after he has made his offer to buy but before he receives an acceptance, the seller will have offered to sell, will have received details of the contract from the central system and will have acknowledged receipt to the central system so that as far as the seller is concerned, the contract is complete. The buyer will have received details of the offer from the central system and have made his acceptance or an alternative offer to buy but due to the channel failure he will not have received any details of the contract. He will be uncertain of his position and may assume that his acceptance was too late or his offer to buy has not been accepted and consider the contract not made. This will leave the central system and the buyer at odds, and if the terms of business are appropriate, it may be that the central system has to purchase the items from the seller and attempt to sell them in the market itself, possibly at a loss, if the buyer has considered the contract not made.

The system described above has various checking devices, including a time delay device in the central system to interrogate each client if the client does not within a certain period confirm receipt of information which has been sent to it. In response to the time lapse signal at the central system, further interrogations of the client may be made but if no acknowledgement is received, then alarms may be made to alert an operator that enquiries outside the matching system have to be made to sort out the confusion. If the communication channel to the client only failed after he had received details of the transaction but before his acknowledgement was sent out, then his enquiries should uncover the presence in his memory store of the offer and acceptance details which should be sufficient to complete the contract but if the communication channel failed before he received details of the bargain, then the central system may be at risk in having to find an alternative buyer.

### SUMMARY OF THE INVENTION

The present invention as claimed attempts to overcome this problem by removing the need for a time lapse generator at the central station and by providing one in each client station. Time lapse generators can still be provided at the central station, but for other purposes. If a client is making an offer to sell, his offer to sell is transmitted to the central station as before and when a deal is matched, details of the amount offered for purchase are sent back to the selling client who acknowledges in the normal way. The time lapse is generated at the client station following the receipt of a massage from the central system and will in due course generate an alarm if within a predetermined time lapse period a further message is not received back from the central system. The time lapse is preferably started by the receipt and storage of a message but it could be started by the transmission of an outgoing message. If the time lapse generator is not stopped within a predetermined time, the alarm is generated and the deal is denoted as suspect, requiring further checking with the other party or with the central station before it can be considered binding.

It may be arranged that the identity of the other party is not revealed at the initial message sending stage. When an alarm is raised, the client is simply informed that his deal is not fully confirmed and that further checking is required. Since he does not know the identity of the other party, he clearly cannot check with him but instead can check with a central enquiry station who then checks with the other party and reports back that the deal is either confirmed or cancelled. It could also be arranged that the identity of the other party is transmitted in the initial message but is simply kept hidden by the display apparatus at the clients station until full confirmation is achieved. This avoids any problems of a client adopting different modes of enquiry according to the identity of his possible buyer or vendor. In the anonymous system as described here, the details of the other party are only displayed at the final confirmation of the bargain.

### DESCRIPTION OF THE DRAWINGS

Examples of the invention will now be described with reference to the accompanying drawings in which:-
Figure 1 is a diagram of a central station with two client stations, showing the messages between, and operations at, each station in diagrammatic form, and
Figures 2 to 7 are message flow charts for various events in matching a bargain.

### DESCRIPTION OF THE PREFERRED EMBODIMENTS

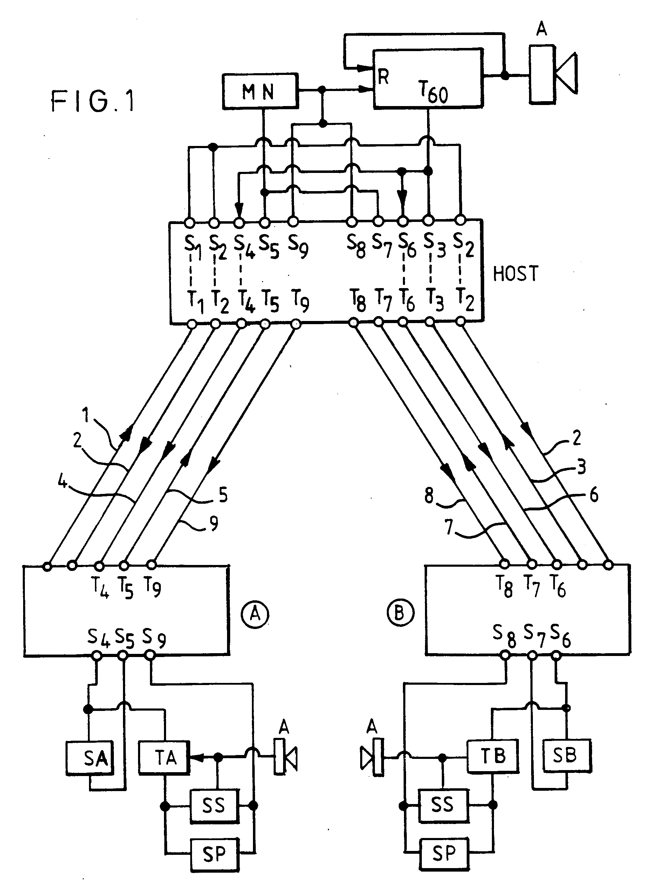

In the message diagram of Figure 1, various messages are transmitted between stations. Each station can be considered to have a signal terminal S and a message terminal T for each message. For a transmitted message, the operator of the station causes a signal to be applied to the signal terminal and this causes the message to be transmitted from T. For a received message, the message is applied to T and this causes a command signal to be generated at S. Separate terminals and message lines are shown for each message, but in practice a single communication channel between the host and a station will suffice, and separate terminals for each message may not be necessary since the station will in practice receive a message and detect which type of message it is and generate appropriate command signals and apply them to appropriate devices at that station. For ease of understanding, it is convenient to illustrate the system with a plurality of message lines and terminals, even though they may not be separately present in practice.

The connection and operation of the system will be described with reference to the situation in which client A makes an offer to sell one million items at a given price and this offer is transmitted as message 1 to the central system known as the host computer. This offer is broadcast as message 2 to all clients including client A who made the offer and client B by the host computer. If client B does not wish to buy the full one million items but makes a counter offer as message 3 to buy one hundred thousand items at that price, the host computer sends a message 4 to client A that he has sold one hundred thousand items to client B at the offered price and it sends message 6 to client B that he has bought.

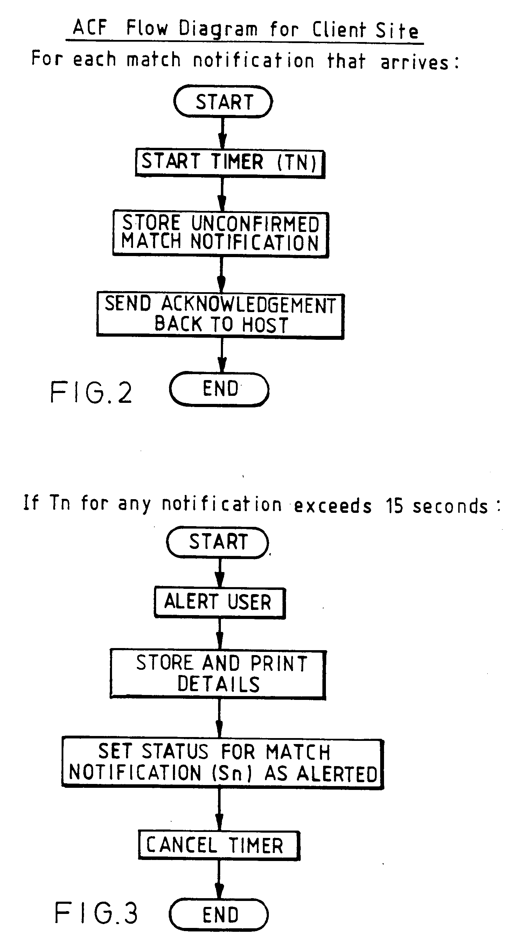

The receipt of message 4 at terminal T4 prompts a command signal at terminal S4 which is fed to two locations. The first location is a store S which stores the message, and after storage causes the sending of an acknowledgement message 5 from terminal S5 to the host computer of the receipt of the message at client A. The second location is the timer T which is started. These procedures are indicated by connections in Figure 1 and by the flow chart of Figure 2.

Similarly message 6 received at T6 at client station B is fed to a corresponding store SB and timer TB from terminal S6; the stored message from SB is returned in acknowledgment at S7 and sent back to the host as message 7 from terminal T7.

As will be described later, message 5 and 7 at the host station prompt the transmission of acknowledgment message 8 and 9 to the client stations B and A respectively.

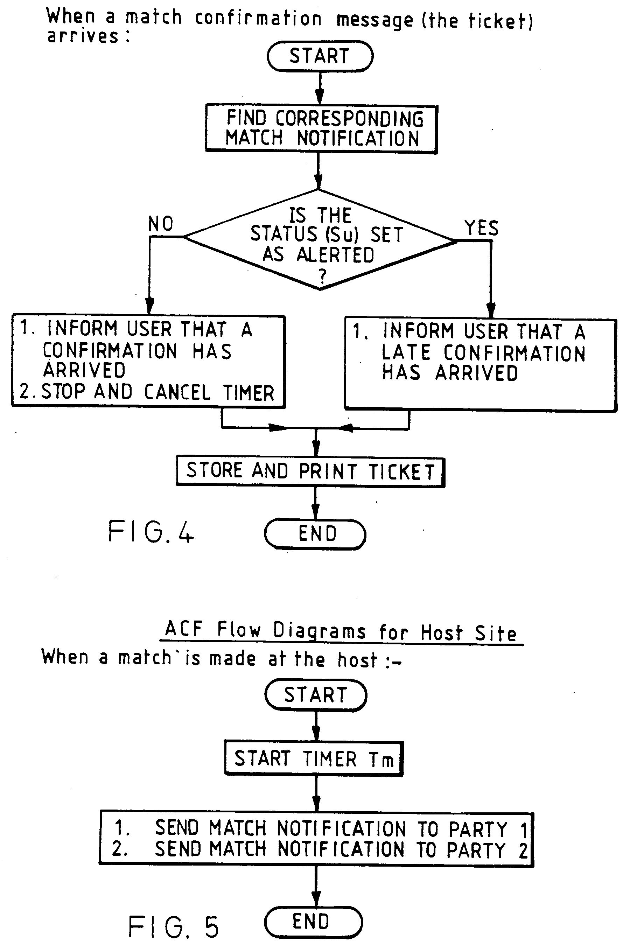

The timers TA and TB have 15 second periods. At client station A, if a confirmatory message 9 is received within this period, it simply causes a store and print device (SP) to store and print the bargain as confirmed. If the timer reaches the end of its period before a message 9 has been received, the time-out signal is fed firstly to the store and print device where it causes the device to store and print the bargain as 'unconfirmed' and secondly to the 'set status' device where the status is set to 'unconfirmed' which activates the associated alarm to warn the client of the unconfirmed bargain, as shown in the connections of Figure 1 and the flow chart of Figure 3. If the confirmatory message is received after the end of the 15 second period, the message acts as described above when the message is received within the 15 second period, but also resets the 'set status' device from 'unconfirmed' to 'confirmed' which de-activates the alarm. This is shown in the flow chart of Figure 4.

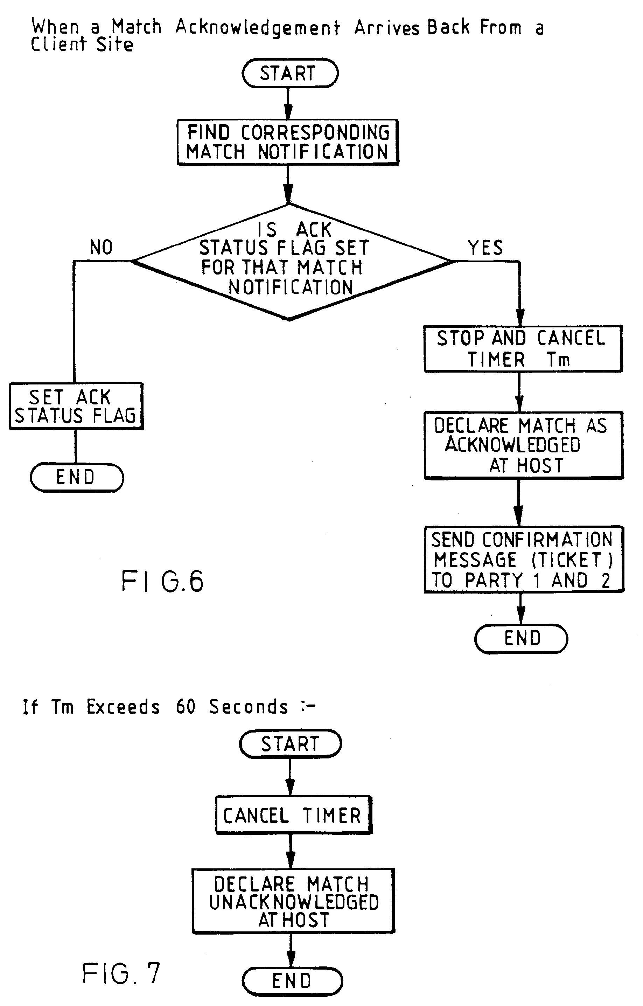

At the host terminal, an optional checking system may be provided. In this case the receipt of message 3 from client B offering to buy certain items at the offered price will prompt a command signal on terminal S3 to operate a timer and also send match notification signals 4 and 6 to the respective clients via terminals S4, T4, S6 and T6. This is shown by connections in Figure 1 and in the flow chart of Figure 5. The acknowledgment signals 5 and 7 which are received back from clients will prompt corresponding command signals at terminals S5 and S7 which will be passed to the match notification store. If the bargain has not yet been acknowledged by either party, the first signal will cause the store to change to the state of having been acknowledged by one party. If it is already in that state, the receipt of the signal will have three functions, to stop and cancel the timer, to declare the match as fully acknowledged at the host site and to send confirmation messages 8 and 9 to the respective clients via terminals S8, T8, S9 and T9. This is shown in the connections of Figure 1 and the flow chart of Figure 6.

If the timer at the host is not cancelled and reset within 60 seconds, a time-out signal with two functions is generated, one to cancel the timer and the second to activate alarm A and declare the match as un-acknowledged at the host site. This un-acknowledged declaration may prompt an operator at the host to take action to check with the respective clients or the checking may be left to the clients to put in hand themselves, either directly between clients if they have been made aware of the identity of the other party to the bargain or else through the medium of the host site if the identity of the other party has not yet been revealed. This is shown in the flow chart of Figure 7.

When the clients remain unidentified to each other until the match is made and acknowledged, message 4 need only contain details of the amount purchased and need not identify the buyer, details of the buyer being only included in message 9. Message 4 could contain the missing identification data, but this identification can be suppressed by the display until message 9 is received. Similarly the details of the vendor need not included in message 6 to the purchaser, being instead contained in message 8 or they could be included in message 6 and suppressed until receipt of message 8.

When clients are identified to each other at an early stage, subsequent communication can be made directly and not through the host; the disadvantage of this arrangement is that full records of transactions in all stages cannot be made at the host. However the direct communication reduces the chance of transmission failure.

## Claims

1. An offer matching system comprising a host station, a plurality of client stations respectively connected to the host station by a communication link, a timer device at one of these stations, means for acknowledging messages received at said one station, the timer device being started in response to a first message at said one station and stopped in response to a second message at said one station and an alarm at said one station responsive to the timer device continuing beyond a predetermined time, and characterised in that a said timer device is located at each client station.

2. A system as claimed in Claim 1 wherein the first message is a message received from another station in response to an offer made from said one station.

3. A system as claimed in Claim 1 wherein the first message is a message from said one station acknowledging a message received from another station.

4. A system as claimed in any one of claims 1 to 3 wherein the first message is sent to said host station on said link.

5. A system as claimed in any one of claims 1 to 4 wherein the second message is an acknowledgement from said other station of receipt from said first station of said first message or of a message sent in response to said first message.

6. A system as claimed in any one of claims 1 to 5 wherein the client station comprises a status indicator, the status indicator being responsive to the timing out of the timer device to indicate 'unconfirmed' status and being set to 'confirmed' status by the receipt of said second message at said station.

7. A system as claimed in claim 6 wherein the client station comprises an alarm operable in response to the unconfirmed status.

8. A system as claimed in any one of claims 1 to 7 wherein the client station comprises a store and print device to store and print received messages and their status.

9. A system as claimed in any one of claims 1 to 8 wherein the client station comprises a store to store an initial message, said acknowledgement means being arranged to acknowledge said initial message after storage thereof.

10. A system as claimed in any one of claims 1 to 9 wherein the host station comprises a timer operable in response to a message received from a client station and re-settable in response to a message received from an associated client station.

11. A system as claimed in claim 10 comprising an alarm at the host station operable in response to timing out of the timer.

12. A system as claimed in any one of claims 1 to 11 wherein the host station comprises a status indicator, settable to an unconfirmed status when a first acknowledgement message is received from a client station and settable to a confirmed status when a second acknowledgement message is received from an associated client station.

13. A system as claimed in claim 12, as dependent on Claim 10, comprising means responsive to the confirmed status to reset the timer.

## Patentansprüche

1. Angebotsanpassungssystem mit einer Hoststation, einer Vielzahl von Kundenstationen, die jeweils mit der Hoststation über eine Nachrichtenverbindung verbunden sind, einer Zeitgebervorrichtung in einer dieser Stationen, einer Einrichtung zum Bestätigen von Meldungen, die in der einen Station empfangen werden, wobei die Zeitgebervorrichtung als Antwort auf eine erste Meldung in der einen Station gestartet wird und als Antwort auf eine zweite Meldung in der einen Station gestoppt wird, und einer Warneinrichtung in der einen Station, die auf die Zeitgebervorrichtung anspricht, die über eine vorbestimmte Zeit hinaus weiterläuft, und dadurch gekennzeichnet, daß die Zeitgebervorrichtung in jeder Kundenstation angeordnet ist.

2. System nach Anspruch 1, bei dem die erste Meldung eine Meldung ist, die von einer anderen Station als Antwort auf ein Angebot, das von der einen Station aus gemacht worden ist, empfangen wird.

3. System nach Anspruch 1, bei dem die erste Meldung eine Meldung von der einen Station ist, die eine Meldung bestätigt, die von einer anderen Station empfangen worden ist.

4. System nach einem der Ansprüche 1 bis 3, bei dem die erste Meldung über die Verbindung an die Hoststation übertragen wird.

5. System nach einem der Ansprüche 1 bis 4, bei dem die zweite Meldung eine Bestätigung von der anderen Station bezüglich des Empfangs der ersten Meldung oder einer Meldung, die als Antwort auf die erste Meldung übertragen worden ist, von der ersten Station.

6. System nach einem der Ansprüche 1 bis 5, bei dem die Kundenstation einen Statusanzeiger aufweist, wobei der Statusanzeiger auf die Zeitbegrenzung der Zeitgebervorrichtung anspricht, um den Status "Unbestätigt" anzuzeigen, und durch den Empfang der zweiten Meldung in der Station auf den Status "Bestätigt" gesetzt wird.

7. System nach Anspruch 6, bei dem die Kundenstation eine Warneinrichtung aufweist, die als Antwort auf den Status "Unbestätigt" betriebsbereit ist.

8. System nach einem der Ansprüche 1 bis 7, bei dem die Kundenstation einen Speicher und eine Druckvorrichtung aufweist, um empfangene Meldungen und deren Status zu speichern und zu drucken.

9. System nach einem der Ansprüche 1 bis 8, bei dem die Kundenstation einen Speicher aufweist, um eine Anfangsmeldung zu speichern, wobei die Bestätigungseinrichtung so eingerichtet ist, daß sie die Anfangsmeldung nach deren Speicherung bestätigt.

10. System nach einem der Ansprüche 1 bis 9, bei dem die Hoststation einen Zeitgeber aufweist, der als Antwort auf eine Meldung, die von einer Kundenstation empfangen wird, betriebsbereit ist und als Antwort auf eine Meldung, die von einer entsprechenden Kundenstation empfangen wird, rücksetzbar ist.

11. System nach Anspruch 10 mit einer Warneinrichtung in der Hoststation, die als Antwort auf eine Zeitbegrenzung des Zeitgebers betriebsbereit ist.

12. System nach einem der Ansprüche 1 bis 11, bei dem die Hoststation einen Statusanzeiger aufweist, der auf einen Status "Unbestätigt" setzbar ist, wenn eine erste Bestätigungsmeldung von einer Kundenstation empfangen wird, und auf einen Status "Bestätigt" setzbar ist, wenn eine zweite Bestätigungsmeldung von einer entsprechenden Kundenstation empfangen wird.

13. System nach Anspruch 12 als Unteranspruch von Anspruch 10 mit einer Einrichtung, die auf den Status "Bestätigt" anspricht, um den Zeitgeber zurückzusetzen.

## Revendications

1. Système de correspondance d'offre comprenant une station hôte, une pluralité de stations client respectivement connectées à la station hôte par une liaison de communication, un dispositif de minuterie au niveau d'au moins l'une de ces stations, un moyen pour accuser réception de messages reçus au niveau de ladite une station, le dispositif de minuterie étant démarré en réponse à un premier message au niveau de ladite une station et étant arrêté en réponse à un second message au niveau de ladite une station, et une alarme au niveau de ladite une station sensible au fait que le dispositif de minuterie poursuit son fonctionnement au-delà d'un temps prédéterminé, caractérisé en ce qu'un dit dispositif de minuterie est localisé au niveau de chaque station client.

2. Système selon la revendication 1, dans lequel le premier message est un message reçu depuis une autre station en réponse à une offre réalisée depuis ladite une station.

3. Système selon la revendication 1, dans lequel le premier message est un message provenant de ladite une station qui accuse réception d'un message reçu depuis une autre station.

4. Système selon l'une quelconque des revendications 1 à 3, dans lequel le premier message est envoyé à ladite station hôte sur ladite liaison.

5. Système selon l'une quelconque des revendications 1 à 4, dans lequel le second message est un accusé de réception provenant de ladite autre station de réception depuis ladite première station dudit premier message ou d'un message envoyé en réponse audit premier message.

6. Système selon l'une quelconque des revendications 1 à 5, dans lequel la station client comprend un indicateur d'état, l'indicateur d'état étant sensible au dépassement de temps imparti du dispositif de minuterie pour indiquer un état "non confirmé" et étant établi à un état "confirmé" par la réception dudit second message au niveau de ladite station.

7. Système selon la revendication 6, dans lequel la station client comprend une alarme actionnable en réponse à l'état non confirmé.

8. Système selon l'une quelconque des revendications 1 à 7, dans lequel la station client comprend un dispositif de stockage et d'impression pour stocker et imprimer des messages reçus et leurs états.

9. Système selon l'une quelconque des revendications 1 à 8, dans lequel la station client comprend un stockage pour stocker un message initial, ledit moyen d'accusé de réception étant agencé pour accuser réception dudit message initial après son stockage.

10. Système selon l'une quelconque des revendications 1 à 9, dans lequel la station hôte comprend une minuterie actionnable en réponse à un message reçu depuis une station client et réajustable en réponse à un message reçu depuis une station client associée.

11. Système selon la revendication 10, comprenant une alarme au niveau de la station hôte actionnable en réponse à un dépassement de temps imparti de la minuterie.

12. Système selon l'une quelconque des revendications 1 à 11, dans lequel la station hôte comprend un indicateur d'état ajustable à un état non confirmé lorsqu'un premier message d'accusé de réception est reçu depuis une station client et ajustable à un état confirmé lorsqu'un second message d'accusé de réception est reçu depuis une station client associée.

13. Système selon la revendication 12 lorsqu'elle dépend de la revendication 10, comprenant un moyen sensible à l'état confirmé pour remettre à l'état initial la minuterie.
